# EUROPÄISCHE PATENTSCHRIFT

(11) **EP 2 685 670 B1**
(45) Veröffentlichungstag und Bekanntmachung des Hinweises auf die Patenterteilung: **04.03.2015**
(21) Anmeldenummer: 13176194.2
(22) Anmeldetag: 11.07.2013
(51) Int. Cl.: H04L 12/40, H04L 12/24, H04L 12/931, H04L 12/935

(54) **Bustransceiver**
Bus transceiver
Transpondeur à bus

(30) Priorität: 13.07.2012 EP 12176285
(43) Veröffentlichungstag der Anmeldung: 15.01.2014
(73) Patentinhaber: ELMOS Semiconductor AG, 44227 Dortmund (DE)
(72) Erfinder: Liem, Marco, 10317 Berlin (DE)
(74) Vertreter: Von Kreisler Selting Werner - Partnerschaft von Patentanwälten und Rechtsanwälten mbB

(56) Entgegenhaltungen:
- WO-A2-2007/001629
- US-A1- 2006 084 479
- FLUKE NETWORKS: "Troubleshooting Guide for Industrial Ethernet and other Network Protocols", INTERNET CITATION, 31. Dezember 2009 (2009-12-31), Seiten 1-14, XP002684784, Gefunden im Internet: URL:http://www.newark.com/pdfs/techarticle s/fluke/3456874_6513_ENG_A_W.PDF [gefunden am 2012-10-08]

## Beschreibung

Die Erfindung betrifft einen Bustransceiver als Schnittstelle eines Bussystems nach außen, insbesondere zum elektronisch unterstützten Labeling und zur elektronisch unterstützten Konfiguration und Zugangsberechtigung. Ferner betrifft die Erfindung ein Bussystem mit einem Bustransceiver und einer mit diesem kommunizierenden Vorrichtung insbesondere zum elektronisch unterstützten Labeling und zur elektronisch unterstützten Konfiguration und Zugangsberechtigung

### Einleitung

Für viele (vernetzte) Geräte bzw. Anschlüsse an (vernetzten) Geräten ist oft gefordert, dass der Benutzer sie direkt am Gerät/Anschluss selbst eindeutig identifizieren, den aktuellen Zustand/Konfi.guration auslesen oder konfigurieren kann.

Ein besonders wichtiges Beispiel ist der Bereich der Industrieautomatisierung, in der die folgende Struktur den Markt komplett dominiert: Eine Steuerung interagiert beispielsweise mit dem Prozess/der Fabrik über so genannte Ein-Ausgabekanäle (E/As). Ein E/A (Ein/Ausgabekanal) im Sinne dieser Offenbarung ist die physikalische Realisierung der Schnittstelle einer Steuerung hin zu den Sensoren/Aktoren/Geräten eines gesteuerten industriellen Prozess. Beispiele für E/As sind digitale 24V Ein/Ausgänge, single ended in und/oder out, analoge 0..20mA / 0..10V 4..20mA (in oder out, fully differential & single ended) Ein/Ausgänge oder intelligente Verbindungen wie z.B. IO Link oder Hart. E/A Baugruppen enthalten meist mehrere E/A Kanäle (typ. 4-16) und können in die Steuerung integriert, an der Steuerung direkt, oder über einen Bus angeschlossene sein. Die E/As sind mit einzelnen Kabeln mit den zu steuernden Geräten verbunden. Ein solches E/A im Sinne dieser Offenbarung kann auch die Anschlussmöglichkeit für ein Gerät oder Kabel, beispielsweise ein Stecker oder eine Buchse für einen Sensor, sein. Eine einzige Steuerung kontrolliert oft tausende E/As. Entsprechende E/As sind in den verschiedensten Formen Stand der Technik. Dieser Stand der Technik weist jedoch verschiedene Probleme auf.

Folgende Probleme gilt es, in diesem Zusammenhang zu lösen:
1. Diese physikalischen E/As sind jeweils eindeutig der entsprechenden Repräsentation im Steuerungsprogram zuzuordnen. Im Stand der Technik geschieht dies entweder indirekt über die Identifikation der E/A Baugruppe - beispielsweise über eine direkt oder automatisch durch relative Position am Busstrang vergebene Busadresse - oder über die Identifikation des Kanals - beispielsweise durch Beschriftung oder physikalische Position auf E/A Baugruppe im Schaltschrank. Auf dieser Basis erfolgt dann beispielsweise eine individuelle, manuelle Beschriftung jedes E/A Kanals auf der EA Baugruppe selbst oder dem angeschlossenen Kabel. Diese manuelle Durchführung der Zuordnung ist sehr arbeitsintensiv, kostenträchtig und fehleranfällig. Die notwendige Kontrolle der richtigen Zuordnung ist sehr aufwendig und entspricht nicht dem Poka-Yoke Gedanken, der Vermeidung von Fehlermöglichkeiten.
2. Einige E/A Kanäle können auch online über das Steuerprogramm oder eine Bus(geräte)parametrisierung konfiguriert werden (z.B. Strom oder Spannungseingang). Die Konfiguration ist oft direkt am Anschluss nicht sichtbar oder änderbar.
3. Der Zustand der E/As wird meist nur unzureichend über eine LED pro Kanal angezeigt. Es wäre wünschenswert mehr Detailinformationen wie z.B. die Spannung bei analogen Ein- und Ausgängen oder Sonderfälle wie z.B. Überlast anzuzeigen.
4. Bei E/As mit unterlegter Kommunikationsfunktion wie z.B. IO-Link, Hart oder Modbus wäre es sehr sinnvoll, zusätzlich die Identität, Typ, Konfiguration oder Zustand des intelligenten angeschlossenen Geräts direkt am Kanal der E/A Scheibe auslesen zu können, um die Zuordnung E/A Kanal zu Sensor/Aktor(kabel) überprüfen zu können.
5. Ein Schutz vor Manipulation und eine Tracibility der Einstellungen ist nur mit großem Aufwand zu erreichen.

Neben den klassisch über E/A Kanäle 1:1 angeschlossenen Geräten existieren auch direkt busfähige (ASI, SmartWire-DT,...) Geräte, welche die E/As überflüssig machen. Für diese Geräte ist die Erfindung analog zu den E/As anwendbar. Alle dort beschriebenen Probleme sind auch hier relevant. Das Zuordnungsproblem ist bei den direkt busfähigen Geräten nur um eine Ebene gegenüber den E/As verschoben: Statt der Zuordnung E/A zu Sensor-/Aktor-Kabel ist es bei den direkt busfähigen Geräten die Zuordnung Bustransceiver zu Applikation z.B. die Zuordnung Bustransceiver zum Motorkabel beim Schütz, die Zuordnung Bustransceiver zur Position des Tasters auf dem Bedienpanel oder die Zuordnung Bustransceiver zum Sensor im Feld. Besonders marktrelevante Geräte sind Sensoren / Aktoren allgemein wie Bedienelemente (Taster, Schalter, Signallampen, Drehknöpfe, Drehgeber), Schütze, Motorstarter, Leistungsschalter, Circuit Breakers, Frequenzumrichter, Softstarter, Servos, und Näherungs-/Positionsschalter.

Im Prinzip können die klassischen E/A Kanäle als 1:1 Datenbusse mit einer rein binären Information (an/aus) oder einer analogen Information (beispielsweise (0mA...20mA) aufgefasst werden. Aufgrund dieser Verallgemeinerung sind daher immer, wenn vom Bustransceiver geschrieben wird, solche E/As unter dem Begriff Bustransceiver zusammenfassend eingeschlossen, die das Steuersignal eines Steuerrechners (dies entspricht einem Datenbussignal) direkt auf ein Steuersignal für ein Gerät (GS) umsetzen. Der Begriff des Datenbusses wird insofern in diesem Zusammenhang auch auf einfache digitale und analoge Steuerleitungen angewandt.

Auch soll der Begriff des Datenbusses komplexere digitale und analoge Anschlussbusse für E/As wie beispielsweise IO Link, "0...20mA" und UART umfassen.

Diese Probleme treten aber nicht nur in industriellen Netzwerken auf. Sie treffen auch auf andere Bussysteme zu. Solche anderen Beispiele sind alle Arten von vernetzten Geräten (CAN, LIN Knoten im Auto), und insbesondere solche mit mehreren Applikationsanschlüssen (Switches, Router). Besonders wichtig ist dies in komplexen Bussystemen, wie sie beispielsweise in Home-Bus-System oder Transportmitteln, insbesondere einem KfZ, einem LKW, einem Bus, einem Schiff, einem Flugzeug, einem Flugkörper, einer Lokomotive, einem Zug oder einem Triebwagen vorkommen. Auch taucht dieses Problem bei der Vernetzung von Energiequellen, Verbrauchern, Steuerungen, Reglern, Zählern, und ähnlichen Einrichtungen im Rahmen von Smart-Grids auf.

Die folgenden Busse und Busprotokolle kommen beispielsweise für die erfindungsgemäße Verwendung als Datenbus (DB)/ Datenbusprotokoll in Frage. Die Liste ist selbstverständlich nicht vollständig und umfasst verschiedene OSI-Layer:

Profibus / Profinet, EtherCAT, Interbus, AS-Interface, CIP-Protokolle, CANopen, CC-Link, Modbus, Fieldbus Technology, P-NET, Lonworks, SERCOS, BACnet, Bitbus, Measurement Bus (DIN-Messbus), Powerlink, USB, Ethernet (IEEE 802), firewire (IEEE 1394), V.10 (RS232), V.11, V.28 (RS232), X.26 (RS232), X.27 (RS232), EIA-423, EIA-232, EIA-423, EIA-422, EIA-485, EIA-423, I²C, IO-Link, LIN, CAN-Busse (ISO 11898, ISO 11992, ISO 11783, SAE J1939, SAE J2411, ISO 11783), Flexray, KNX, EIB, ISO/IEC 14543, EN 50090, EIB, EIBA, MIL-STD-1553, MIL-STD-1397, TIA-1113, Homeplug, universal powerline bus, IEEE 488, IEEE 754, IEEE 829, IEEE 830, IEEE 1003, IEEE 1014-1987, IEEE 1016, IEEE 1076, IEEE 1149.1, IEEE 1164, IEEE 1219, IEEE 1233, IEEE 1275, IEEE 1284, IEEE 1355, IEEE 1364, IEEE 1394, IEEE 1451, IEEE 1471, IEEE 1516, IEEE 1541-2002, IEEE 1547, IEEE 1584, IEEE 1588, IEEE 1596, IEEE 1603, IEEE 1613, IEEE 1667, IEEE 1675-2008, IEEE 1685, IEEE 1801, IEEE 1900, IEEE 1901, IEEE 1902, IEEE 1905, IEEE 11073, IEEE 12207, DIN 66264-1, MIL-Std-1553, DIN3758, DIN13321, DIN13757 / EN 13757, DIN14908, DIN EN 50090, DIN EN 50129, DIN EN 60728, DIN EN 60821 (VME Bus), DIN EN 61158, DIN EN 62453, DIN EN 60 625, DIN EN 60796, IEC 821, DIN IEC 60822, ISO 6951, ISO /IEC 9316, ISO 10857, ISO / IEC 11458, ISO / IEC 14776 (SPI, SCSI), ISO 13961 (SCI), SAE-AIR 4901 (PI Bus), SAE AS 4075A, SAS AS 4710, und äquivalente Standards mit gleicher Zielsetzung.

Aus US-A-2006/0084479 ist ein Drahtlos-Transceiver zum Anschluss an ein drahtloses digitales Kommunikationsmedium bekannt, an dem mindestens ein über das Kommunikationsmedium steuerbarer Bus-Teilnehmer zur Aufnahme von Signalen zwecks Übermittlung von Daten insbesondere nach außen angeschlossen ist.

In WO-A-2007/001629 ist eine Drahtlos-Kommunikationsvorrichtung für Vorrichtungen unter Verwendung einer NFC-Technik beschrieben.

Schließlich ist in Fluke Networks: "Troubleshooting Guide for Industrial Ethernet and ether Network Protocols", INTERNET CITATION, 31. Dezember 2009 (2009-12-31), Seiten 1-14, XP002684784, Gefunden im Internet: URL:http://www.newark.com/pdfs/techarticles/fluke/3456874 6513 ENG A W.PDF [gefunden am 2012-10-08] * How do I know whether my connectors and ports are live? Etherscope Series II.; Seiten 7, 9 eine Anweisung zur Behebung von Fehlern für industrielle Ethernet- oder andere Netzwerk-Protokolle beschrieben.

### Aufgabe der Erfindung

Aufgabe der Erfindung ist es, einen Bustransceiver zu schaffen, mit dem sich die oben genannten Probleme bewältigen lassen, wobei auf einfache Art und Weise eine bei Bustransceivern normalerweise vorhandene optische Anzeige zur Übermittlung von Statusinformationen und anderen Konfigurationsdaten eines Bustransceivers bzw. eines an den Bustransceiver angeschlossenen Busteilnehmers genutzt werden kann.

Zur Lösung dieser Aufgabe wird mit der Erfindung ein Bustransceiver nach Anspruch 1 vorgeschlagen; einzelne Ausgestaltungen der Erfindung sind Gegenstand der Unteransprüche.

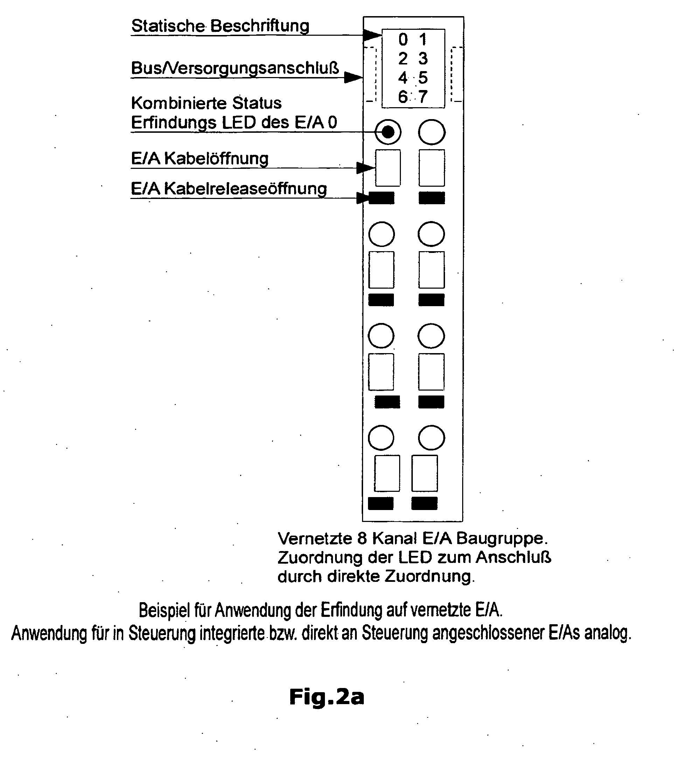

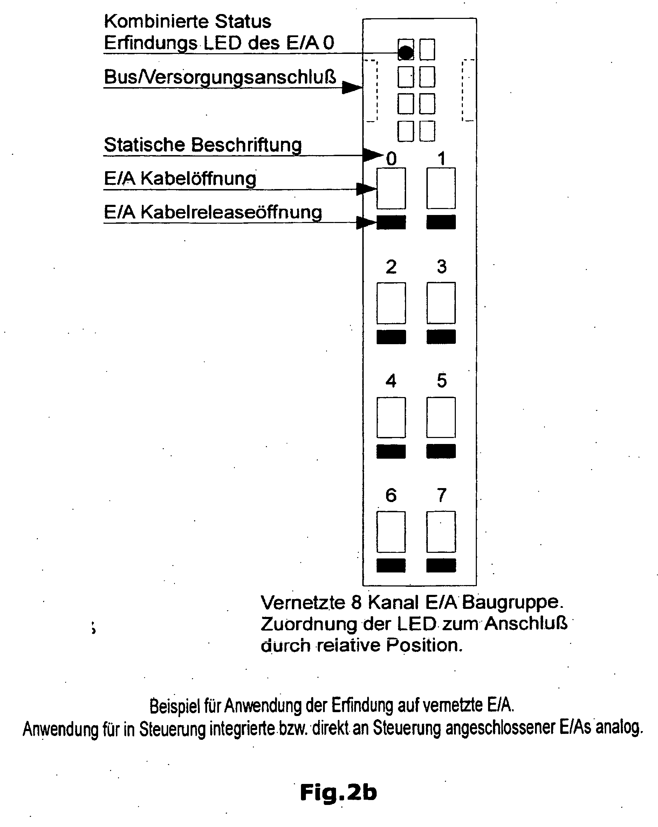

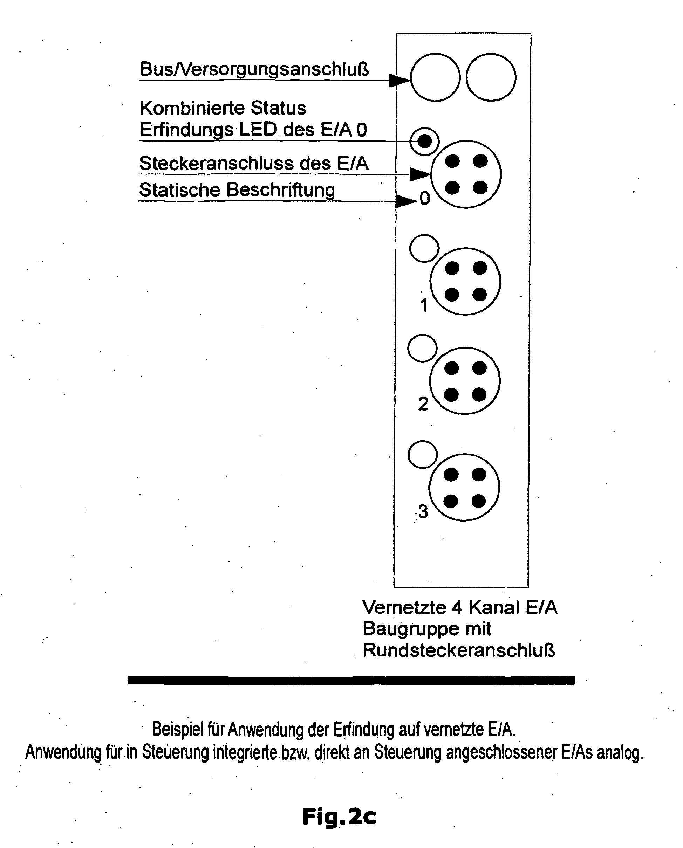

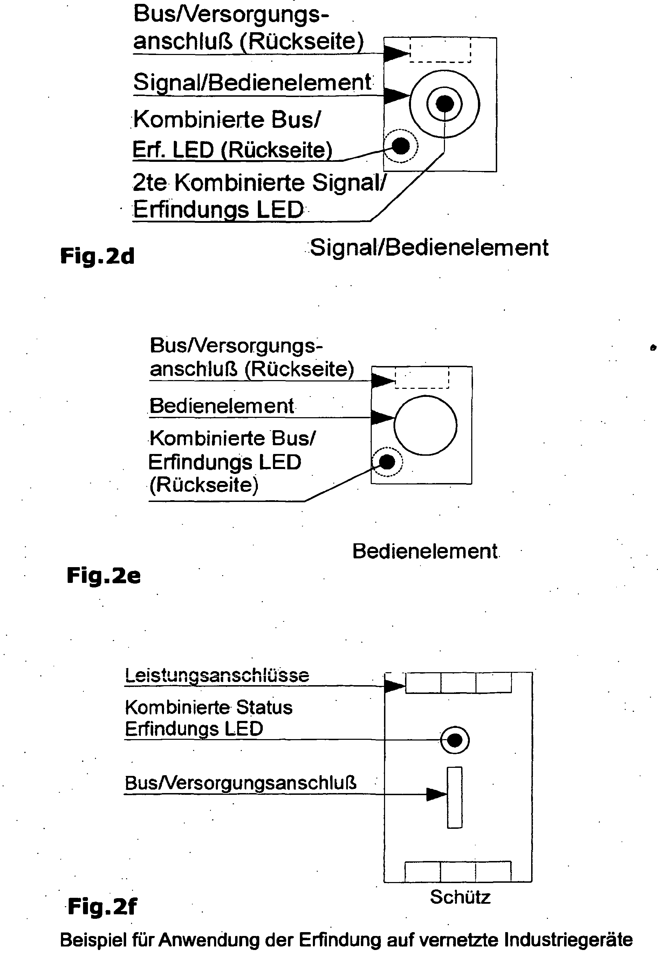

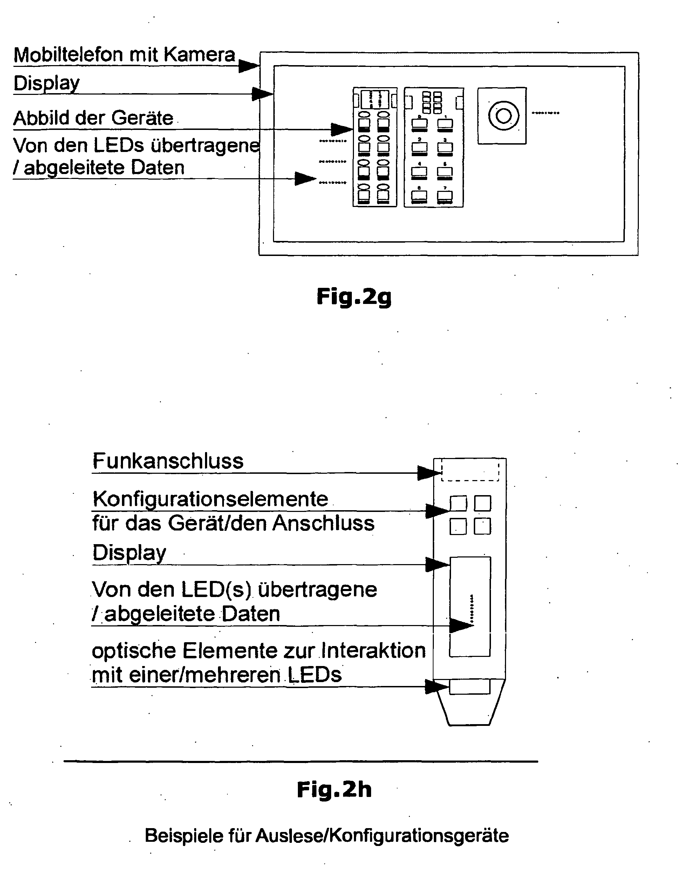

Typische Anwendungsgebiete der Erfindung sind beispielsweise:
1a. vernetzte und nicht vernetzte E/A (Fign. 2a,b,c)
1b. vernetzte Busknoten mit mehreren Anschlüssen (Switches, Router)
2. Intelligente vernetztes Geräte wie beispielsweise ein Schütz oder ein Knopf (Figuren 2d, 2e, 2f)

### Beschreibung des Grundgedankens der Erfindung

Grundgedanke der Erfindung ist es, über eine insbesondere drahtlos arbeitende Schnittstelle eines Kommunikationsbus Informationen über den Bus bzw. seine Teilnehmer zu erlangen und gegebenenfalls den Zustand des Kommunikationsbus bzw. seiner Teilnehmer von extern zu ändern. Ein Ausführungsbeispiel einer drahtlosen Schnittstelle wird nachfolgend beschrieben. Dabei ist die drahtlose Schnittstelle optisch realisiert, und zwar mittels mindestens einer LED, die im sichtbaren Wellenlängenbereich sendet. Sollte die Schnittstelle auch bidirektional arbeiten können, so bedarf es noch einer Fotodiode oder dergleichen sichtbare bzw. nicht-sichtbare elektromagnetische Wellen empfangenden Empfangseinrichtungen.

LEDs weisen in der Regel einen PN Übergang auf, der bei Bestromung nicht nur Licht aussendet, sondern bei Beleuchtung wie eine Solarzelle eine Spannung generiert. Grundsätzlich kann daher jede LED im halbduplex Verfahren als bidirektionaler Kommunikationskanal genutzt werden. Die Aussendung von Informationen erfolgt über eine Modulation des LED-Lichtes durch eine treibende Verstärkerendstufe. Der Empfang erfolgt in nicht bestromten Senderuhepausen über die Nutzung der LED als PIN Diode. Dies erfolgt beispielsweise insbesondere über die direkte oder indirekte Messung des Sperrstroms.

Nach der Erfindung ist also vorgesehen, die drahtlose optische Schnittstelle eines Bustransceivers, bei der es sich im Regelfall um einen LED handelt, zur optischen Kommunikation mit einer externen Vorrichtung zu nutzen. Dies geschieht mittels modulierten sichtbaren Lichts. Dabei lässt sich die LED wahlweise derart modulieren, dass die Modulationsart für das menschliche Auge erkennbar ist oder aber auch nicht erkennbar ist. Der erstgenannte Fall ist insbesondere dann interessant, wenn die optische Kommunikation nur auf Anforderung erfolgt. Dann nämlich wird die für das menschliche Auge erkennbare Modulation des Lichts für den Betrachter als nicht störend empfunden. Sollte dagegen die optische Kommunikation über die optische drahtlose Bustransceiver-Schnittstelle dauerhaft oder aber intermittierend von Zeit zu Zeit erfolgen, also nicht lediglich auf Anforderung hin, so könnte eine für das menschliche Auge erkennbare Modulation des Lichts störend wirken. Daher ist es zweckmäßig, in diesen Fällen eine Modulationsart zu wählen, die für das optische Auge nicht erkennbar ist. Die beiden zuvor genannten Modulationsarten unterscheiden sich insbesondere in der Modulationsfrequenz, über die steuerbar ist, was für das menschliche Auge (noch) erkennbar ist und was für das menschliche Auge nicht mehr erkennbar ist.

Schließlich ist es alternativ auch möglich, dass die LED im nicht-sichtbaren Wellenlängenbereich sendet, wobei dann die Wahl bestimmter Modulationsarten nicht relevant ist.

Die Erfindung wird nachfolgend anhand von Ausführungsbeispielen und unter Bezugnahme auf die Zeichnung näher erläutert. Im Einzelnen zeigen dabei:
- Fig. 1: ein beispielhaftes Bussystem
- Fig. 2a: ein Beispiel einer vernetzten 8 Kanal E/A Baugruppe mit acht direkt zum jeweiligen Anschluss zugeordneten erfindungsgemäßen LEDs
- Fig. 2b: ein Beispiel einer vernetzten 8 Kanal E/A Baugruppe mit acht durch relative Position zum jeweiligen Anschluss zugeordneten erfindungsgemäßen LEDs
- Fig. 2c: ein Beispiel einer vernetzten 4 Kanal E/A Baugruppe mit Rundsteckern mit vier direkt zum jeweiligen Anschluss zugeordneten erfindungsgemäßen LEDs
- Fig. 2d: ein Beispiel eines Signal- und Bedienelements mit einer kombinierten Busanzeige-LED auf der Rückseite, die den Busbetrieb für den Menschen erkennbar anzeigt, die gleichzeitig für die erfindungsgemäße Übertragung von Daten genutzt wird und einer kombinierten LED Statusanzeige LED auf der Vorderseite, die den Status für den Menschen erkennbar anzeigt, die ebenfalls gleichzeitig für die erfindungsgemäße Übertragung von Daten genutzt wird.
- Fig. 2e: ein Beispiel eines Bedienelements mit kombinierter Busanzeige-LED, die den Busbetrieb für den Menschen erkennbar anzeigt, die gleichzeitig für die erfindungsgemäße Übertragung von Daten genutzt wird.
- Fig. 2f: ein Beispiel-Schütz mit einer erfindungsgemäßen LED zum Auslesen der Statusinformationen wie beschrieben. Diese LED kann beispielsweise auch ausgewählte Statusinformationen des Schützes gleichzeitig so ausgeben, dass ein Mensch sie ohne Gerät erfassen kann. Dies kann beispielsweise durch ein Blinken geschehen.
- Fig. 2g: eine beispielhafte Darstellung der Geräte und Informationen in einer Nutzungssituation auf dem Display (D) eines Mobiltelefons (M)
- Fig. 2h: ein beispielhafter Anzeiger/Konfigurator (AK)

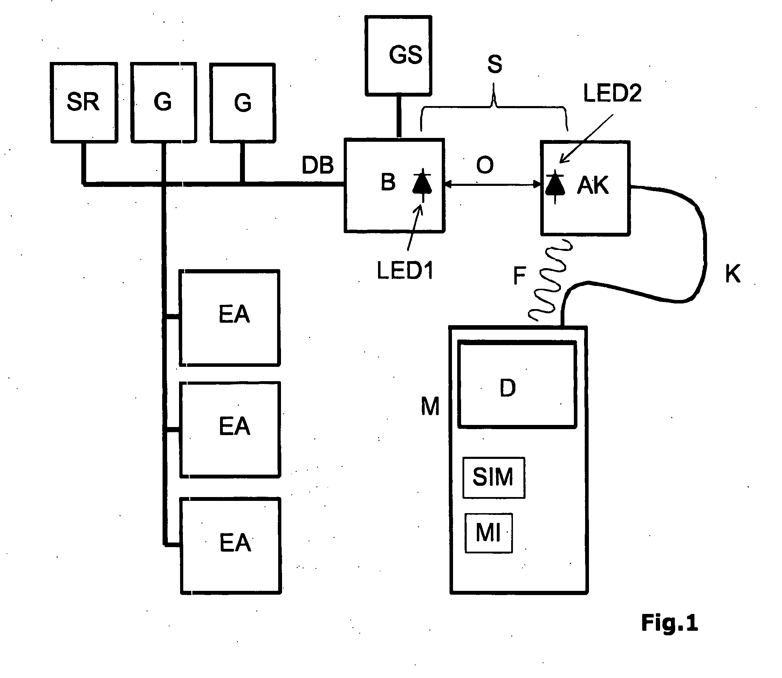

Die Erfindung wird anhand von Fig. 1 erläutert.

An dem erfindungsgemäßen vernetzten Gerät (B), im Folgenden Bustransceiver genannt, sendet eine LED in ein Medium (O), beispielsweise Luft hinein. Die LED ist typischerweise auch für das Bedienpersonal sichtbar. Die LED sendet beispielsweise eine eindeutige Identifikation des Bustransceivers (B) oder empfängt Befehle. Statt der Identifikation kann LED beispielsweise auch Informationen wie die komplette Beschriftung des Bustransceivers (B), Informationen über den aktuellen Zustand des Bustransceivers, Informationen über die Konfiguration des Bustransceivers oder von Teilen des Bustransceivers senden. Diese LED ist dem lokalen Bustransceivers bzw. dem jeweiligen Anschluss eindeutig zugeordnet. Idealerweise ist die LED ein Teil des Bustransceivers. Dies ist aber nicht zwingend der Fall. Die Zuordnung kann der LED beispielsweise über die absolute Position, die relative Position an der LED Montagestelle oder eine Beschriftung der LED erfolgen.

Der Bustransceiver (B) ist mit einem Datenbus (DB) verbunden. Dieser Datenbus kann, wie oben ausgeführt auch nur eine reine Steuerleitung eines Steuerrechners (SR) sein. An dem Datenbus können weitere Geräte (G) angeschlossen sein. Der Bustransceiver (B) ist mit dem Gerät (GS) verbunden. Der Bustransceiver kommuniziert zusätzlich über die LED (LED1).

Die Informationen können kontinuierlich, auf Anforderung über die LED (LED1) selbst oder auf Anforderung über den Bus (DB) durch die LED (LED1) in das optische Medium (O) übertragen werden. Bei dem optischen Medium (O) dürfte es sich typischerweise um Luft oder ein Glasfaserkabel handeln. Statt einer LED (LED1) sind aber auch andere elektromagnetische Sender/Empfänger, beispielsweise induktiv gekoppelte Spulen oder kapazitiv gekoppelte Elektroden, denkbar.

Die Informationen können für das menschliche Auge unsichtbar oder sichtbar durch die LED (LED1) übertragen werden. Eine unsichtbare Informationsübertragung erhält man beispielsweise, bei einem konstanten Duty-Cylce beispielsweise mit Manchester Kodierung, wobei der Duty-Cycle kürzer ist als die Latenzzeit des menschlichen Auges.

Optimalerweise aber nicht notwendiger Weise wird eine vorhandene LED genutzt. Bevorzugt handelt es sich dabei um eine Multi-Color LED. Bei E/As ist dies die typischerweise dem Kanal zugeordnete Status LED. Bei Bus-Koten ist dies typischerweise die Bus-Status-LED oder die Power-Status-LED. Bei Signalleuchten oder 7-Segmentanzeigen / LED Matrizen können beispielsweise jeweils die LEDs direkt unter Umständen auch im Zeit- und/ oder Raummultiplex genutzt werden. Es kann auch eine separate IR LED oder ein IR Element in einer vorhandenen LED genutzt werden.

Das Auslesen erfolgt über einen separaten Anzeiger/Konfigurator (AK) welcher auf die LED(s) ausgerichtet oder besser mittels eines mechanisch/optischen Adapters aufgesetzt wird und die Information über eine entsprechende zweite LED (LED2) empfängt und anzeigt oder weitersendet.

Die LED (LED1) des Bustransceivers (B) mit der nicht gezeichneten zugehörigen Steuerlogik, das Medium (O), die LED (LED2) des Anzeigers/Konfigurators (AK) mit der nicht gezeichneten zugehörigen Steuerlogik bilden die Schnittstelle (S).

Der Anzeiger/Konfigurator (AK) kann typischerweise die Konfiguration beispielsweise des Bustransceivers und/oder von einzelnen Geräten (G, GS) ermöglichen. Durch das Aufsetzen/Ausrichten ist die Information dem Bustransceiver bei mehreren Bustransceivern im System eindeutig zugeordnet. Prinzipiell ersetzt AK das sonst zum Durchmessen der Kanäle genutzte Multimeter bzw. den zur Konfiguration verwendeten Schraubenzieher. Der AK kann mit einem Mobilteil (M), vorzugsweise einem Smart-Phone, beispielsweise über ein Kabel (K) oder eine Funkschnittstelle (F), insbesondere Bluetooth oder eine IR-Schnittstelle, vernetzt sein, welches dann mehr Details auf einem Bildschirm (D) anzeigt oder sonst wie verfügbar macht. Ein solches Mobilteil (M) ermöglicht somit eine komfortablere und vor allem zeitsparende und weniger fehleranfällige Konfiguration. Auch kann ein solches Portables Gerät (M) mit einem Drucker ausgestattet sein, der zum Drucken von Beschriftungen für den Bustransceiver (B) befähigt ist, wodurch eine Falschbeschriftung, wie in der Vergangenheit, durch Ausdruck der relevanten Daten über die richtige LED-Schnittstelle (O) wesentlich unwahrscheinlicher wird. Natürlich ist es denkbar, die Funktionalität eines Anzeigers/Konfigurators (AK) direkt in einen Mobilteil (M) zu integrieren.

Die Übertragung der Daten über die LED Schnittstelle kann insbesondere bidirektional beispielsweise durch eines der gängigen Modulationsverfahren erfolgen. Solche sind beispielsweise Amplitudenmodulation, Frequenzmodulation, Phasenmodulation, Puls-Weiten-Modulation, Modulation mit konstantem Duty-Cycle und Farbmodulation.

Informationen, die über die Schnittstelle transportiert werden können, können beispielsweise sein:
- Zustand des Bustransceivers (B) selbst und Informationen, die im Bustransceiver gespeichert sind (z.B. Daten des letzten Zugriffs),
- Zustand des Datenbusses (DB),
- Zustand der Datenverbindung zu einem oder mehreren anderen an besagten Datenbus (DB) logisch oder physikalisch angeschlossenen Rechnern (SR) und/ oder Geräten (G, EA),
- Zustand eines an den Bustransceiver (B) anders als über den besagten Datenbus angeschlossenen Gerätes (GS),
- Zustand der Daten oder Datenverbindung, die von einem oder mehreren anderen an besagten Datenbus logisch oder physikalisch angeschlossenen Rechnern (SR) und/ oder Geräten (G) über den Bustransceiver (B) an ein anderes als über besagten Datenbus angeschlossenes Gerät (GS) durch den Bustransceiver (B) übermittelt werden,
- Zustand der Daten oder Datenverbindung, die von einem anderes als über besagten Datenbus angeschlossenen Gerät (GS) über den Bustransceiver (B) an eines oder mehrere an besagten Datenbus (DB) logisch oder physikalisch angeschlossenen Rechner (SR) und/ oder Geräte (G) durch den Bustransceiver übermittelt werden
- Befehle und/oder Daten an Geräte (G, GS, EA), Steuerrechner (SR), Bustransceiver (B) die deren Zustände ändern.

Alternativ können die LEDs aber auch direkt mit der (Video)Kamera z.B. eines Mobiltelefons (M) ausgelesen werden. Die Informationen können beispielsweise dem Bild auf dem Display (D) überlagert angezeigt werden, wodurch die Information ebenfalls den Geräten/Anschlüssen eindeutig zugeordnet ist. Auch ist eine zustandsabhängige Benutzerführung möglich. Hierbei kann eine visuelle Marke auf dem AK durch die Kamera erfasst werden und als Ankerpunkt für die Platzierung der anzuzeigenden Informationen auf dem überlagerten Bild im Display (D) des beispielhaften Mobiltelefons (M) dienen. Für die Ermittlung dieses Punktes kann eine Bildverarbeitung genutzt werden. Um eine hinreichende Datenrate zu erzielen, kann es in diesem Fall sinnvoll sein, die LEDs aller Geräte am Bus von einer unsichtbaren auf eine sichtbare Modulation umzuschalten. Dies kann beispielsweise über den Bus durch ein Bedienelement, beispielsweise einen Knopf, am Bustransceiver (B) oder einem anderen vordefinierten Gerät im Bussystem geschehen. Eine andere Möglichkeit zur Aktivierung dieses Modus ist ein Signal des AK an einen Bustransceiver (B) über eine Übertragungsstrecke (O). Auf diese Weise kann das System auch in einen Modus versetzt werden, der es einem Menschen zumindest theoretisch ermöglicht, gewisse speziell angeforderte Informationen ohne Hilfsmittel aus dem System zu erhalten. Ein solcher Modus kann beispielsweise in einer Umschaltung zu niedrigeren Blink-Frequenzen bestehen. Dies kann insbesondere dann sinnvoll sein, wenn man in einer Vielzahl von Bustransceivern, denjenigen finden will, der in einem bestimmten Zustand, insbesondere einem bestimmten Fehlermodus, ist.

Dadurch dass über die Anzeige LED (LED1) eine Schnittstelle nach außen hergestellt werden kann, ist es möglich, den Zugang zu den Konfigurationsmöglichkeiten und den zugreifbaren Daten zu beschränken. Daher ist es sinnvoll, wenn der Bustransceiver die Daten erst auf eine qualifizierte Anforderung hin über die Schnittstelle (S) versendet. Für die Qualifikation der Anforderung können Identifikationsdaten des Mobilteils (M) genutzt werden. Diese können beispielsweise in Daten der SIM-Karte (SIM) eines Smart-Phones (M) oder in Gerätenummern (MI) oder in Pin-Nummern bestehen, die derjenige eingeben muss, der eine Konfigurationsänderung vornehmen will oder der Daten auslesen will.

Im Falle eines Zugriffs ist es sinnvoll, diesen Zugriff beispielsweise auf dem Steuerrechner (SR) zu protokollieren. Insbesondere Konfigurationsänderungsdaten, Identifikationsdaten und deren Zeitpunkte zu protokollieren. Auf diese Weise lassen sich leicht Traceibility-Systeme herstellen, die es beispielsweise erlauben, festzustellen, wer, hat wann eine Anlage umkonfiguriert.

Schlägt eine Identifizierung fehl, so kann eine vordefinierte Reaktion des Bussystems erfolgen.

Schließlich ist es sinnvoll, ggf. den Datenverkehr über die Schnittstellen (O, K, F) geeignet zu verschlüsseln.

Dies ist insbesondere dann von Bedeutung, wenn Bezahlvorgänge oder Teile solcher Vorgänge über eine solche Schnittstelle abgewickelt werden können. Beispielsweise können über eine solche Schnittstelle Kalibrationsdaten auf einen Stromzähler geladen werden und dieser gegen Manipulation gesichert werden.

### Vorteile der Erfindung

Die Erfindung ermöglicht eine einfache Identifikation und Konfiguration von Baugruppen in größeren Schaltschränken, und im Feld. Insbesondere vermeidet sie nach dem Stand der Technik unvermeidliche menschliche Übertragungsfehler bei der manuellen Beschriftung. Gleichzeitig ermöglicht sie die Verriegelung des Zugriffs für unbefugte Personen und Geräte und die Anwendungen des Stands der Sicherheitstechnik für vernetzte Computersysteme.

**Liste der Bezeichnungen**

| Nr. | Bezeichnung |
|---|---|
| SR | Steuerrechner |
| DB | Datenbus |
| G | Weiteres Gerät am Datenbus (nicht vorhanden, wenn der Datenbus nur ein Steuerbus ist) |
| EA | Ein-/Ausgabestelle |
| GS | Zu steuerndes Gerät / Aktor / Sensor / Messstelle etc. |
| B | Bustranceiver (insbesondere EA mit Schnittstelle O) |
| O | Übertragungskanal (insbesondere optische Übertragungsstrecke) |
| LED1 | Sende- und Empfangs-LED des Bustransceivers B |
| LED2 | Sende- und Empfangs-LED des Anzeiger/konfigurator AK |
| AK | Anzeiger/Konfigurator |
| M | Smart-Phone oder Mobilteil |
| D | Display |
| SMI | SIM Karte oder Hardware, die in der Lage ist, personenbezogene Identifikationsdaten zu liefern |
| MI | Machine Identification oder Hardware, die in der Lage ist, mobilteil bezogene Identifikationsdaten zu liefern |
| K | Datenkabel zur Kopplung Mobilteil M <-> Anzeiger/Konfigurator AK (Alternative zu F) |
| F | Funkschnittstelle zur Kopplung Mobilteil M <-> Anzeiger/Konfigurator AK (Alternative zu F) |
| S | Schnittstelle bestehend aus LED1, O, LED2 und den zugehörigen, nicht gezeichneten Steuerelektroniken |

## Patentansprüche

1. Bustransceiver (B) zum Anschluss an einen analogen oder digitalen Kommunikationsbus (DB), an den mindestens ein über den Kommunikationsbus (DB) steuerbarer Bus-Teilnehmer (GS) zur Aufnahme von Messwerten und/oder Signalen und/oder Einspeisung von Daten in den Kommunikationsbus (DB) und/oder zur Entnahme von Daten aus dem Kommunikationsbus (DB) zwecks Übermittlung dieser Daten insbesondere nach außen angeschlossen ist,
**gekennzeichnet durch**
- eine drahtlose Schnittstelle (S) zur Kommunikation mit einer Vorrichtung (M) zur (i) Kommunikation des Zustandes und/oder der Konfiguration mindestens eines Elements aus einer Gruppe von Elementen, die den Kommunikationsbus (DB), den steuerbaren Bus-Teilnehmer (GS) oder andere Teilnehmer des Kommunikationsbus (DB), Datenverbindungen innerhalb des Kommunikationsbus (DB) bzw. seiner Teilnehmer sowie von diesen nach außen, und den Bustransceiver (B) umfasst, und/oder (ii) zur Kommunikation der Zugangsberechtigung zum Kommunikationsbus (DB) und/oder seiner Teilnehmer,
- wobei die Schnittstelle (S) eine LED zur optischen Kommunikation mit der Vorrichtung (M) mittels modulierten sichtbaren Lichts aufweist,
- wobei Kommunikationsinformation **durch** die LED wahlweise kontinuierlich oder auf Anforderung über die LED oder auf Anforderung über den Kommunikations-Bus (PB) übertragbar ist, und
- wobei das Licht der Schnittstelle (S) mittels einer von dem menschlichen Augen nicht erkennbaren Modulationsart oder mittels einer durch das menschliche Auge erkennbaren Modulationsart moduliert ist.

2. Bustransceiver (B) nach Anspruch 1, **dadurch gekennzeichnet, dass** die Vorrichtung (M) eine Identifikationseinheit, insbesondere in Form einer Chip-Karte wie z.B. SIM-Karte, zur Identifizierung der Vorrichtung (M) und/oder ihres Nutzers aufweist und dass die Schnittstelle (S) von der Vorrichtung (M) oder ihrer Identifikationseinheit verschlüsselt oder unverschlüsselt Daten empfängt, die eine Identifikation der Vorrichtung (M) und/oder ihres Nutzers durch den Bustransceiver (B) und/oder einen an den Kommunikationsbus (DB) angeschlossenen Teilnehmer erlauben.

3. Bustransceiver (B) nach Anspruch 2, **dadurch gekennzeichnet, dass** der externe Zugriff auf den Kommunikationsbus (DB) und/oder Teilnehmer desselben und/oder der Zugriff auf einen Datenaustausch mit Teilnehmern des Kommunikationsbus (DB) von der erfolgreichen Identifikation und/oder Zertifizierung der Vorrichtung (M) und/oder ihres Nutzers abhängig ist.

4. Bustransceiver (B) nach Anspruch 2 oder 3, **dadurch gekennzeichnet, dass** die Datenkommunikation über die Schnittstelle (S), insbesondere die (i) Weitergabe und Durchführung von über die Vorrichtung (M) übermittelten Befehlen im Kommunikationsbus (DB) und/oder (ii) die Ausgabe von Daten an die Vorrichtung (M), von solchen Daten abhängig ist, die durch die Identifikationseinrichtung der Vorrichtung (M) und/oder den Nutzer bereitgestellt werden bzw. wurden.

5. Bustransceiver (B) nach einem der Ansprüche 1 bis 4, **dadurch gekennzeichnet, dass** über die Schnittstelle (S) und/oder den Bustransceiver (B) zumindest Teile von Bezahlvorgängen abwickelbar sind, insbesondere das Kalibrationsdaten und/oder Verbrauchsdaten über die Schnittstelle (S) vom Bustransceiver (B) nach extern und/oder umgekehrt übermittelbar sind.

6. Bustransceiver (B) nach einem der Ansprüche 1 bis 5, **dadurch gekennzeichnet, dass** der Bustransceiver (B) abgeschlossen ist an ein Home-Bus-System oder ein Smart-Grid oder ein Datenbussystem in einem Transportmittel, insbesondere einem KfZ, einem LKW, einem Bus, einem Schiff, einem Flugzeug, einem Flugkörper, einer Lokomotive, einem Zug, einem Triebwagen.

7. Bustransceiver (B) nach einem der Ansprüche 1 bis 6, **dadurch gekennzeichnet, dass** die ausgesendeten Wellen Informationen über den Zustand und/oder die Konfiguration und/oder die Zugangsberechtigung bezüglich mindestens eines der Elemente der Gruppe von Elementen enthält.

8. Bustransceiver (B) nach einem der Ansprüche 1 bis 7, **dadurch gekennzeichnet, dass** die Schnittstelle (S) bidirektional ausgebildet ist.

9. Bustransceiver (B) nach einem der Ansprüche 1 bis 8, **dadurch gekennzeichnet, dass** durch Übermittlung von Befehlen und/oder Daten von außen an die Schnittstelle (S) der Zustand und/oder die Konfiguration und/oder die Zugangsberechtigung bezüglich mindestens eines Elements der Gruppe von Elementen abfragbar und/oder veränderbar ist.

10. Bustransceiver (B) nach einem der Ansprüche 1 bis 9, **dadurch gekennzeichnet, dass** die Vorrichtung (M) ein externer Anzeiger und/oder Konfigurierer, insbesondere ein externes Mobiltelefon oder ein anderes externes mobiles Endgerät eines drahtlosen und/oder drahtgebundenen Kommunikationssystem ist.

11. Bustransceiver (B) nach einem der Ansprüche 1 bis 10, **dadurch gekennzeichnet, dass** die Übermittlung von Informationen über besagte Schnittstelle (S) durch Amplitudenmodulation und/oder Frequenzmodulation und/oder Phasenmodulation und/oder Puls-Weiten-Modulation und/oder Modulation mit konstantem Duty-Cycle und/oder Farbmodulation und/oder durch Duty Cycle und/oder Frequenzumschaltung erfolgt.

12. Bustransceiver (B) nach einem der Ansprüche 1 bis 11, **dadurch gekennzeichnet, dass** es sich bei dem mindestens einen steuerbaren Bus-Teilnehmer (GS) um einen Sensor oder eine Messvorrichtung oder ein Bedienelement oder eine Messeinrichtung oder eine Signalisierungsvorrichtung, einen Motor, einen Aktor, eine thermische Last, eine Lichtquelle, eine Maschine, einen Taster, einen Schalter, einen Drehknopf, einen Drehgeber, eine Schütze, einen Motorstarter, einen Leistungsschalter, einen Circuit Breaker, einen Frequenzumrichter, einen Softstarter, einen Servo einen Näherungsschalter, einen Positionsschalter, eine Werkzeug- oder sonstige Maschine, ein Sicherung, ein Schutzschalter, ein micro circuit braker, ein Fehlerstromschutzschalter, ein Residual-Current-Device, ein IT-Netzwerkgerät, insbesondere einen Hub, einen Router einen Gateway, einen Switch, einen Rechner, oder eine Anschlussstelle, insbesondere einen Stecker oder eine Buchse, für die vorgenannten Geräte oder andere Geräte handelt.

13. Bustransceiver (B) nach einem der Ansprüche 1 bis 12, **dadurch gekennzeichnet, dass** die LED der Schnittstelle (S) durch eine Mehrfarben-LED realisiert ist.

## Claims

1. Bus transceiver (B) for connection to an analog or digital communication bus (DB) having connected to it at least one bus subscriber (GS), controllable via the communication bus (DB) for receiving measurement values and/or signals and/or infeed of data into the communication bus (DB) and/or for extraction of data from the communication bus (DB) for transmission of these data particularly for the purpose of transmission of these data particularly to the exterior,
**characterized by**
- a wireless interface (S) for communication with a device (M) for (i) communicating the state and/or the configuration of at least one element of a group of elements comprising the communication bus (DB), the controllable bus subscriber (GS) or other subscribers of the communication bus (DB), data links within the communication bus (DB) and respectively among its subscribers and from these to the exterior, and the bus transceiver (B), and/or (ii) for communication of the authorization of access to the communication bus (DB) and/or its subscribers,
- the interface (S) comprising an LED for optical communication with the device (M) by means of modulated visible light,
- communication information being transmittable by the LED selectively continuously or upon request of the LED or upon request of the communication bus (DB), and
- the light of the interface (S) being modulated by a type of modulation not detectable by the human eye or by a type of modulation detectable by the human eye.

2. Bus transceiver (B) according to claim 1, **characterized in that** the device (M) comprises an identification unit, particularly in the form of a chip card such as e.g. a SIM card, for identification of the device (M) and/or the user thereof, and that the interface (S) is operative to receive, in encrypted or non-encrypted form, data from the device (M) and/or the identification unit thereof that allow the bus transceiver (B) and/or a subscriber connected to the communication bus (DB) to identify the device (M) and or/the user thereof.

3. Bus transceiver (B) according to claim 2, **characterized in that** the external access to the communication bus (DB) and/or the subscriber thereof and/or the access to a data exchange with subscribers of the communication bus (DB) are dependent on successful identification and/or certification of the device (M) and or/the user thereof.

4. Bus transceiver (B) according to claim 2 or 3, **characterized in that** the data communication via the interface (S), particularly (i) the forwarding and executing, in the communication bus (DB), of instructions transmitted via the device (M) and/or (ii) the outputting of data to the device (M), is dependent on such data which are being provided and respectively have been provided by the identification unit of the devoice (M) and/or by the user.

5. Bus transceiver (B) according to any one of claims 1 to 4, **characterized in that**, via the interface (S) and/or the bus transceiver (B), at least parts of payment transactions can be performed, particularly that calibration data and/or consumption data are transmittable via the interface (S) from the bus transceiver (B) to the exterior and/or in the opposite direction.

6. Bus transceiver (B) according to any one of claims 1 to 5, **characterized in that** the bus transceiver (B) is connected to a home bus system or a smart grid or a data bus system in a means of transportation, particularly in an automobile, a truck, a bus, a ship, an airplane, a missile, a locomotive, a train, a railcar.

7. Bus transceiver (B) according to any one of claims 1 to 6, **characterized in that** the transmitted waves contain information on the state and/or the configuration and/or the access authorization with respect to at least one of the elements of said group of elements.

8. Bus transceiver (B) according to any one of claims 1 to 7, **characterized in that** the interface (S) is bidirectional.

9. Bus transceiver (B) according to any one of claims 1 to 8, **characterized in that**, by transmission of instructions and/or data from the exterior to the interface (S), the state and/or the configuration and/or the access authorization with respect to at least one of the elements of said group of elements is queryable and/or changeable.

10. Bus transceiver (B) according to any one of claims 1 to 9, **characterized in that** the device (M) is an external indicator and/or configuration unit, particularly an external mobile phone or another external mobile end device of a wireless and/or hardwired communication system.

11. Bus transceiver (B) according to any one of claims 1 to 10, **characterized in that** the transmission of information via said interface (S) is performed by amplitude modulation and/or frequency modulation and/or phase modulation and/or pulse width modulation and/or modulation with constant duty cycle and/or color modulation and/or by duty cycle and/or frequency switching.

12. Bus transceiver (B) according to any one of claims 1 to 11, **characterized in that** the at least one controllable bus subscriber (GS) is a sensor or a measuring device or an operating element or a measuring device or a signaling device, a motor, an actor, a thermal load, a light source, a machine, a pushbutton, a switch, a turning knob, a rotary encoder, a contactor, a motor starter, a power switch, a circuit breaker, a frequency converter, a soft starter, a servo, a proximity switch, a position switch, a power tool or other machine, a fuse, a protective switch, a micro circuit breaker, a fault current protection switch, a residual current device, a IT network device, particularly a hub, a router, a gateway, a switch, a computer, or a connection site, particularly a plug or a socket, for the above-mentioned devices or other devices.

13. Bus transceiver (B) according to any one of claims 1 to 12, **characterized in that** the LED of the interface (S) is realized by a multi-color LED.

## Revendications

1. Transpondeur à bus (B) pour raccordement à un bus de communication (DB) analogique ou numérique, auquel est connecté au moins un élément connecté au bus (GS) pouvant être commandé via le bus de communication (DB) et destiné à recevoir des valeurs de mesure et/ou des signaux et/ou à introduire des données dans le bus de communication (DB) et/ou à extraire des données du bus de communication (DB) à des fins de transmission de ces données, en particulier vers l'extérieur,
**caractérisé par**
- une interface sans fil (S) servant à la communication avec un dispositif (M) destiné à (i) la communication de l'état et/ou de la configuration d'au moins un élément issu d'un groupe d'éléments qui comprend le bus de communication (DB), l'élément connecté au bus (GS) pouvant être commandé et/ou d'autres éléments connectés du bus de communication (DB), des circuits de données à l'intérieur du bus de communication (DB) ou de ses éléments connectés ainsi que depuis ceux-ci vers l'extérieur, et le transpondeur à bus (B), et/ou destiné à (ii) la communication de l'autorisation d'accès au bus de communication (DB) et/ou à ses éléments connectés,
- l'interface (S) présentant une DEL assurant la communication optique avec le dispositif (M) à l'aide d'une lumière visible modulée,
- les informations de communication pouvant être transmises par la DEL au choix de manière continue ou sur demande via la DEL ou sur demande via le bus de communication (DB), et
- la lumière de l'interface (S) étant modulée par un type de modulation non identifiable par l'oeil humain ou par un type de modulation identifiable par l'oeil humain.

2. Transpondeur à bus (B) selon la revendication 1, **caractérisé en ce que** le dispositif (M) présente une unité d'identification, en particulier sous la forme d'une carte à puce telle que par exemple une carte SIM, destinée à l'identification du dispositif (M) et/ou de son utilisateur, et **en ce que** l'interface (S) reçoit du dispositif (M) ou de son unité d'identification, sous une forme cryptée ou non cryptée, des données qui permettent une identification du dispositif (M) et/ou de son utilisateur par le transpondeur à bus (B) et/ou un élément connecté au bus de communication (DB).

3. Transpondeur à bus (B) selon la revendication 2, **caractérisé en ce que** l'accès externe au bus de communication (DB) et/ou aux éléments connectés de celui-ci et/ou l'accès à un échange de données avec des éléments connectés du bus de communication (DB) dépend de la réussite de l'identification et/ou de la certification du dispositif (M) et/ou de son utilisateur.

4. Transpondeur à bus (B) selon la revendication 2 ou 3, **caractérisé en ce que** la communication de données via l'interface (S), en particulier (i) la transmission et l'exécution d'ordres transmis via le dispositif (M) dans le bus de communication (DB) et/ou (ii) l'émission de données au dispositif (M) dépendent de données qui sont ou ont été mises à disposition par le dispositif d'identification du dispositif (M) et/ou de l'utilisateur.

5. Transpondeur à bus (B) selon l'une des revendications 1 à 4, **caractérisé en ce qu'**au moins des parties de transactions de paiement sont réalisables via l'interface (S) et/ou le transpondeur à bus (B), en particulier en ce que des données d'étalonnage et/ou des données de consommation sont transmissibles via l'interface (S) du transpondeur à bus (B) vers l'extérieur et/ou inversement.

6. Transpondeur à bus (B) selon l'une des revendications 1 à 5, **caractérisé en ce que** le transpondeur à bus (B) est connecté à un système de bus domestique ou à un réseau intelligent (« smart grid ») ou à un système de bus de données d'un moyen de transport, en particulier une automobile, un camion, un bus, un bateau, un avion, un mobile aérien, une locomotive, un train, une motrice.

7. Transpondeur à bus (B) selon l'une des revendications 1 à 6, **caractérisé en ce que** les ondes émises contiennent des informations sur l'état et/ou la configuration et/ou l'autorisation d'accès concernant au moins l'un des éléments du groupe d'éléments.

8. Transpondeur à bus (B) selon l'une des revendications 1 à 7, **caractérisé en ce que** l'interface (S) est conçue de manière bidirectionnelle.

9. Transpondeur à bus (B) selon l'une des revendications 1 à 8, **caractérisé en ce que**, par la transmission d'ordres et/ou de données depuis l'extérieur vers l'interface (S), on peut interroger sur et/ou faire varier l'état et/ou la configuration et/ou l'autorisation d'accès concernant au moins l'un des éléments du groupe d'éléments.

10. Transpondeur à bus (B) selon l'une des revendications 1 à 9, **caractérisé en ce que** le dispositif (M) est un afficheur externe et/ou un configurateur, en particulier un téléphone mobile externe ou un autre terminal mobile externe d'un système de communication sans fil et/ou filaire.

11. Transpondeur à bus (B) selon l'une des revendications 1 à 10, **caractérisé en ce que** la transmission d'informations via ladite interface (S) s'opère par modulation d'amplitude et/ou modulation de fréquence et/ou modulation de phase et/ou modulation de largeur d'impulsion et/ou modulation à rapport cyclique constant et/ou modulation de couleurs et/ou par commutation de rapport cyclique et/ou de fréquence.

12. Transpondeur à bus (B) selon l'une des revendications 1 à 11, **caractérisé en ce que** l'élément connecté au bus (GS) pouvant être commandé, au moins au nombre de un, est un capteur ou un dispositif de mesure ou un organe de commande ou un système de mesure ou un dispositif de signalisation, un moteur, un actionneur, une charge thermique, une source lumineuse, une machine, un palpeur, un commutateur, un bouton de réglage, un encodeur, un contacteur, un démarreur de moteur, un sectionneur de puissance, un disjoncteur, un convertisseur de fréquence, un démarreur progressif, une commande d'asservissement, un détecteur de proximité, un contacteur de position, un outil ou autre machine, un fusible, un disjoncteur de protection, un micro-rupteur, un disjoncteur-détecteur de fuites à la terre, un disjoncteur différentiel résiduel, un dispositif de réseau IT, en particulier un concentrateur, un routeur, une passerelle, un commutateur, un calculateur ou un point d'accès, en particulier un connecteur mâle ou un connecteur femelle, pour les appareils précités ou d'autres appareils.

13. Transpondeur à bus (B) selon l'une des revendications 1 à 12, **caractérisé en ce que** la DEL de l'interface (S) est réalisée par une DEL multicolore.
